# EUROPEAN PATENT APPLICATION

(11) **EP 1 603 005 A1**
(43) Date of publication of application: **07.12.2005**
(21) Application number: 04013264.9
(22) Date of filing: 04.06.2004
(51) Int. Cl.: G06F 1/16

(54) **Wireless display device and display method thereof**

(71) Applicant: Partner Tech Corp., Shin Tien, Taipei (TW)
(72) Inventor: Yueh, Wen-Hsiang, Linkou Township, Taipei County 244 (TW)
(74) Representative: UEXKÜLL & STOLBERG

(57) **Abstract**

The present invention relates to a wireless display device and display method thereof capable of optionally receiving at least two sources of display signals, wherein the first display signal is provided by a host computer of a wireless computer system via wireless communication, and the second display signal is provided by a portable electronic device via cable communication, whereby the display device used indoors is upgraded as a portable outdoor display. The present invention further provides a switch for cutting off power form batteries to the wireless communication circuit as display signals form the portable electronic device are received, so as to reduce power consumption by the display device and thus prolong the display time thereof.

## Description

### BACKGROUND OF THE INVENTION

### (A) Field of the Invention

The Present invention relates to a wireless display device and display method, particularly thereof capable of optionally receiving at least two sources of display signals, wherein the first source of display signal is provided by a host of a wireless computer system via wireless communication, and the second source of display signal is provided by a portable electronic device via cable communication, whereby the display device used indoors is upgraded as a portable outdoor displayer.

### (B) Description of Related Art

The development of wireless communication enhances convenience in the use of electronic products such as the display, mouse and keyboard of computer systems. Coupled with wireless communication technology, these peripheral devices expand the operating scope from indoor servers to mobile operation wherein users may change their location according to their needs without moving the server. Hence devices such as wireless display, wireless mouse, and wireless keyboard were developed to work with the wireless computer system.

To enhance user's mobility in operating the wireless display, the development of the wireless display is by and large based on the LCD displayer so as to achieve light weight and small size. According to the prior art, the wireless LCD displayer is firmly installed to a base used to erect the wireless LCD on a surface. The wireless LCD displayer receives only one source of the display signals of the host in a computer system.

According to the prior art, a portable personal digital processor may comprise PDA, wireless mobile handset, tablet PC and e-Book wherein the tablet PC functions as ordinary computers, including the MB and storage devices, while e-Book is designed for specific functions, namely helping user download and read articles, books and information.

PDA should satisfy user's needs for applications featuring real-time and on-site data input and processing. In addition, some of the latest models have integrated the functions of PDA into mobile phones for convenience in operation. As long as relevant technology is continuously upgraded and developed, PDA has become a handheld computer featuring faster CPU, larger memory capacity, LCD displayer of more colors or higher pixels, and a full range of interfaces including USB, Serial, IrDa, etc. In addition, some PDAs even have a multi-functional connector for connection between PDA and a wireless mobile handset so a to achieve wireless Internet connection. Furthermore, there is a variety of application software available for PDA, such as the downloads of electronic books, the display of electronic maps, PC games and so on.

### SUMMARY OF THE INVENTION

In accordance to the prior art, the wireless computer system comprises a wireless display that sustains wireless communication with the computer server within a certain distance and range. However, the specific distance and range generally refers to that of indoor activities. When the wireless display is used outdoors and beyond the distance and range specified, there will be no display on its screen.

In addition, the size of PDAs is designed as handheld since they serve as portable personal digital processors. Such a small size makes the LCD displayer of most PDAs smaller than 5cm², which restricts the display of information to a great extent. Particularly when user is reading electronic books, the display can be too small to show enough words to suit the user's browsing speed. The small display may also prevent user from accessing regional information when reading the electronic maps. When user is playing PC games, the small display could cause eyestrain in a short time.

The Present invention aims to provide a wireless display device and display method thereof capable of optionally receiving at least two sources of display signals, wherein the first source of display signal is received via wireless communication, and the second source of display signal is received via cable communication.

Another object of the present invention is to provide a wireless display device and display method whereby the display device used indoors is upgraded as a portable outdoor display by combining it with a portable personal digital processor such as a PDA or a wireless mobile handset.

The other object of the present invention is to provide a wireless display device comprising a recharging base that consists of a recharging circuit and a power cord so that the base can recharge the batteries of the wireless display device when the wireless display device is erected by the base.

In the preferred embodiment of the present invention, the wireless display device comprises: a wireless communication circuit to receive the first display signals provided by a host computer of a wireless computer system via wireless communication; a video input interface to receive the second display signals provided by a portable electronic device via cable communication; a LCD displayer to display the first or second display signals; and a switch to switch from the first or second display signals to the LCD displayer wherein the power supply for wireless communication is cut off when the switch switches from the second display signals to the LCD displayer.

In the further embodiment of the present invention, the wireless display device comprises a recharging base that consists of a recharging circuit and a power cord so that the base can recharge the batteries of the wireless display device when the wireless display device is erected by the base. The display method of the present invention comprises the following steps: receiving a first display signal from a host of a wireless computer system via wireless communication; receiving a second display signal from a portable personal digital processor via cable communication; and utilizing a switch for switching either the first or second display signals to a LCD displayer.

As an embodiment of the present invention, the wireless display device serves as the wireless display of the wireless computer system when it is situated indoors. When the wireless display device is used outdoors, it can be upgraded as a portable outdoor display, tablet PC or e-Book by combining it with a portable personal digital processor such as a PDA or a wireless mobile handset.

### BRIEF DESCRIPTION OF THE DRAWINGS

FIG. 1 is the 3-D drawing of a wireless computer system that comprises the wireless display device of the present invention.
FIG. 2 is the 3-D drawing of the rear view of the display device of the wireless display of the present invention.
FIG. 3 is the block diagram regarding the circuit of the display device of the wireless display of the present invention.

### DETAILED DESCRIPTION OF THE INVENTION

Although a preferred embodiment is given in detailed description with appropriate figures, it will be apparent to those skilled in the art that the implementation may be altered in many ways to achieve the effects of this invention without departing from the scope of the invention. Thus it should also be understood that the following description serves as general disclosure to those skilled in the field of the invention. The present invention is not limited to the content of the description.

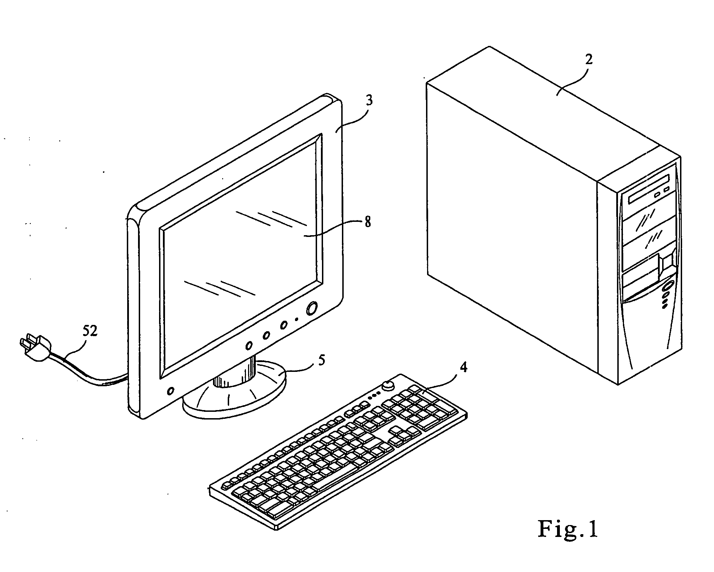

Referring to FIG. 1 for a 3-D drawing of a wireless computer system, the wireless computer system comprises the wireless display device of the present invention. As shown in FIG. 1, in the preferred embodiment of the present invention, a wireless computer system 1 comprises: a wireless host 2 and wireless peripherals consisting of the wireless display of the present invention 3. In addition, the wireless peripherals may comprise a wireless keyboard 4 and a wireless mouse (not shown in the drawing). The wireless display comprises: a display device 3 and a base 5. The base may be installed and removed from the display device 3, and the two devices are connected by an electrical connector. When the display device 3 is installed to the base 5, the display device 3 remains upright for viewing while the electrical connector enhances electric connection between both devices.

In the preferred embodiment of the present invention, when the wireless display device serves as part of the wireless computer system in indoor operation, its display device 3 receives the first display signal provided by the wireless host 2. The display device 3 comprises a LCD displayer showing the first display signal. When the wireless display device is used outdoors, the display device 3 can be upgraded as a portable outdoor display, tablet PC or e-Book by combining it with a portable personal digital processor 6 such as a PDA or a wireless mobile handset. When the display device 3 and the portable personal digital processor 6 are connected electrically, the display device 3 receives the second source of displays provided by the portable personal digital processor 6, and the LCD displayer shows the second display signal.

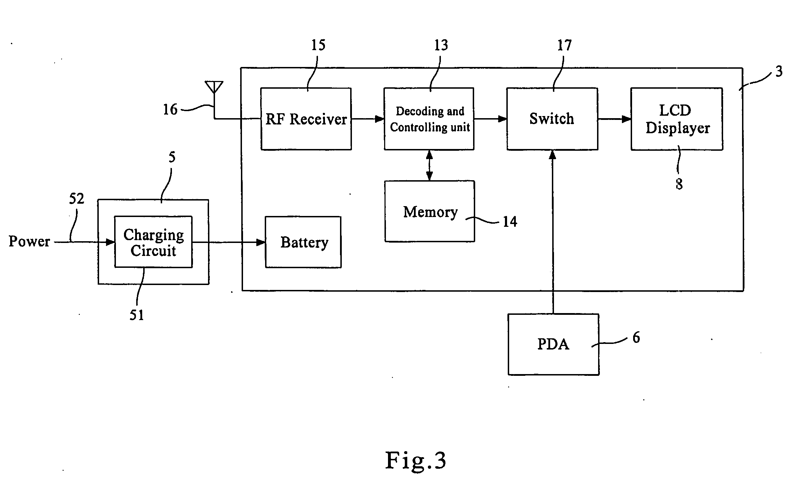

Referring to FIG. 1, the display device 3 of the wireless display comprises batteries (see also FIG. 3) supplying the electricity required when the display device 3 is removed from the base 5. The base 5 comprises a charging circuit 51 and a power cord 52. When the display device 3 is installed on the base 5 and when the two devices are connected electrically, the charging circuit 51 charges the batteries through the electric connection in-between. At the same time, the circuit provides the display device 3 and the wireless host 2 with electricity needed in communication.

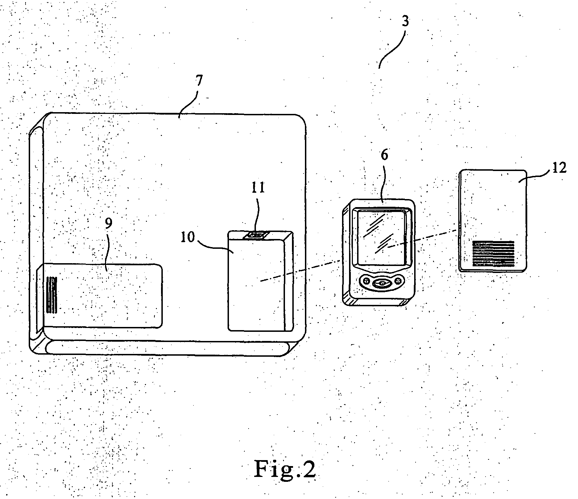

Referring to FIG. 2, namely the 3-D drawing of the rear view of the display device of the wireless display of the present invention, in the preferred embodiment of the present invention, the display device 3 comprises a case 7. In front of the display device 3, a LCD displayer 8 is installed to the case 7. On the panel around the LCD displayer 8, there are several control buttons allocated to the case 8. User may use these control buttons to set the parameters of the LCD displayer 8. On the back of the display device 3, the case 7 contains a battery compartment 9 and an accessory compartment 10. On the back of the display device 3, the case 7 contains a battery compartment 9 and an accessory compartment 10. The electrical connector 11 is installed in the accessory compartment 10 so as to complete electric connection between the portable personal digital processor 6 and the display device 3 through the electrical connector 11, and transfer the second display signal to the LCD displayer 8 for display. In addition, the case 7 contains a cover 12 used to match and cover the accessory compartment 10.

In the modified embodiment of the present invention, the portable personal digital processor such as PDA or wireless mobile handset may also transfer the second display signal to the electrical connector 11 of the display device 3 through a cable (not shown in the drawing).

In the preferred embodiment of the present invention, the power connector or connector 11 is installed to the edge of the case 7. In addition the outline of the case 7 matches the design of the base so that the base keeps the case upright and enables the electrical connector complete power connection when the case is joined onto the base.

Referring to FIG. 3, the block diagram illustrating the circuit of the display device of the wireless display of the present invention, in the preferred embodiment of the present invention, the display device 3 comprises: a wireless communication circuit to receive the first display signals provided by a host computer of a wireless computer system via wireless communication; a video input interface to receive the second display signals provided by a portable personal digital processor 6 via cable communication; and a switch 17 to switch from the first or second display signals to the LCD displayer wherein the power supply for wireless communication is cut off when the switch 17 switches from the second display signals to the LCD displayer 8.

The aforesaid wireless circuit comprises decoding and control unit 13, memory 14, radio frequency receiver 15, and antenna 16 wherein the radio frequency receiver 15 receives carrier signals transmitted by the designated wireless host 2 via the antenna 16. After converting the modulated signals into digital signals, the receiver inputs the signals into the decoding and control unit 13 that proceeds the decoding and saves temporary data onto the memory 14. Once the first display signal from the wireless host 2 is decoded, the switch 17 will control and transfer these signals to the LCD displayer 8.

The video input interface provides user with connection to an external portable digital data processor 6. The video input interface receives the second display signals via cable communication comprising: the power connection between the display device 3 and the portable personal digital processor 6, or power connection facilitated by a cable. According to the prior art, for example, the portable personal digital processor 6 of the PDA enhances direct output of video display signals. Hence the display device 3 receives the second display signals via the video input interface, and the switch 17 controls and transfer these signals to the LCD displayer 8.

The switch 17 described above may be applied as an IC for optional reception of the first display signals provided by wireless communication circuit and the second display signals by the video input interface. The switch also output either the first or second display signal to the LCD displayer 8. The switch 17 comprises multiple electronic switches that can switch between the first and second display signals, and keep both sources from interference produced by each other. To reduce power consumption by the display device 3 and prolong the display time thereof, the switch 17 separates the wireless communication circuit and cuts off power from batteries to the circuit as the second display signals are switched to the LCD displayer 8. The switch 17 thus outputs a power control signal that controls the switch constructed by MOS transistor as on or off so as to cut off power provided by the batteries to the wireless communication circuit.

In another embodiment of the present invention, the movement of the switch 17 is determined by a switch (not shown in the drawing) installed on the case 7. The switching movement produces an electronic signal that is transferred to the switch 17. Thus the switch determines whether to output the first or second display signals to the LCD displayer 8.

In another embodiment of the present invention, the switch 17 comprises a detecting circuit. When the video input interface is connected to the portable personal digital processor 6, the detecting circuit produces signals to switch the second display signals to the LCD displayer 8, and controls power by cutting off power provided by the batteries to the wireless communication circuit.

Many variations of the innovative concepts described in the claims will occur to those skilled in the art. These variations may exceed the scope and spirit of the claimed applications of the invention. Thus the claims of the present invention are not limited to any specific embodiments given in the instructions.

According to a disclosed embodiment of the present invention, the display method provided by the present invention comprises the following steps: the first display signal is received from a host computer of a wireless computer system via wireless communication, and the second display signal is received from a portable personal digital processor via cable communication. In addition, a switch is provided to optionally switch from either the first or second display signal to a LCD displayer.

According to another disclosed embodiment of the present invention, the display method provided by the present invention comprises the following steps: a wireless communication circuit is provided to receive the first display signal provided by a host computer of a wireless computer system via wireless communication. A video input interface is also provided to receive the second display signal provided by a portable personal digital processor via cable communication. In addition, a switch is provided to optionally switch from either the first or second display signal to a LCD displayer and cut off power provided to the wireless communication circuit at the same time.

After the referred embodiments of the present invention are described in details, those skilled in the technique should be able to understand that a variety of modifications and changes are allowed within the claims and the spirit of the present invention, which is not limited to the embodiments described in the instructions.

## Claims

1. A wireless display device, comprising:
a wireless communication circuit for receiving a first display signal from a host of a wireless computer system;
a video input interface for receiving a second display signal from a portable personal digital processor;
a LCD displayer for displaying the first or second display signals; and
a switch for optionally switching either the first or second display signals to the LCD displayer and cutting off a power provided to the wireless communication circuit when switching the second display signal to the LCD displayer.

2. The wireless display device claimed in claim 1, wherein said wireless communication comprises a decoding and controlling unit, a memory, a RF receiver and an antenna.

3. The wireless display device claimed in claim 1, wherein the video input interface is an electrical connector between the wireless display device and the portable personal digital processor.

4. The wireless display device claimed in claim 1, wherein the video input interface is a cable between the wireless display device and the portable personal digital processor.

5. The wireless display device claimed in claim 1, wherein the portable personal digital processor is a PDA or a wireless mobile handset.

6. The wireless display device claimed in claim 1, wherein said switch is an IC for receiving the first and second display signals, and optionally outputting either the first or second display signals to the LCD displayer.

7. The wireless display device claimed in claim 1, wherein the switch comprises a plurality of electronic switches that can switch between the first and second display signals, and isolate interference produced by each other.

8. The wireless display device claimed in claim 1, wherein the switch outputs a power control signal for cutting off a power provided by batteries to the wireless communication circuit.

9. A wireless display device comprising:
a display device comprising a switch to optionally switch either a first display signal or a second display signal to a LCD displayer wherein the first display signal is received from a host computer via wireless communication, and the second display signal is received from a portable personal digital processor via cable communication; and
a base that can be installed to or removed from the display device.

10. The wireless display device claimed in claim 9, wherein the display device comprises a wireless communication circuit for receiving the first display signal provided by the host computer via wireless communication.

11. The wireless display device claimed in claim 9, wherein said wireless communication comprises a decoding and controlling unit, a memory, a RF receiver and an antenna.

12. The wireless display device claimed in claim 9, wherein the display device comprises a video input interface that receives said second display signal provided by a portable personal digital processor via cable communication.

13. The wireless display device claimed in claim 12, wherein the video input interface is an electrical connector between the wireless display device and the portable personal digital processor

14. The wireless display device claimed in claim 12, wherein the video input interface is a cable between the display device and the portable personal digital processor.

15. The wireless display device claimed in claim 9, wherein the portable personal digital processor is a PDA or a wireless mobile handset.

16. The wireless display device claimed in claim 9, wherein said switch is an IC for receiving the first and second display signals, and optionally outputting either the first or second display signals to the LCD displayer.

17. The wireless display device claimed in claim 9, wherein the switch comprises a plurality of electronic switches that can switch between the first and second display signals, and isolate interference produced by each other.

18. The wireless display device claimed in claim 9, wherein the switch outputs a power control signal for cutting off a power provided by batteries to the wireless communication circuit.

19. A wireless display method, comprising the following steps:
receiving a first display signal from a host of a wireless computer system via wireless communication;
receiving a second display signal from a portable personal digital processor via cable communication; and
utilizing a switch for switching either the first or second display signals to a LCD displayer.
